Europäisches Patentamt

European Patent Office

Office européen des brevets

(19)

(11) Veröffentlichungsnummer: **0 037 037**
**A1**

(12) # EUROPÄISCHE PATENTANMELDUNG

(21) Anmeldenummer: **81102115.3**

(22) Anmeldetag: **20.03.81**

(51) Int. Cl.³: **F 24 C 15/10**
**A 47 J 36/34**

(30) Priorität: **27.03.80 DE 8008401 U**
**16.05.80 DE 3018680**

(43) Veröffentlichungstag der Anmeldung:
**07.10.81 Patentblatt 81/40**

(84) Benannte Vertragsstaaten:
**AT BE CH DE FR GB IT LI LU NL SE**

(71) Anmelder: **Klotz, Helmut**
**Ortsstrasse 45**
**D-8871 Kötz 2(DE)**

(72) Erfinder: **Klotz, Helmut**
**Ortsstrasse 45**
**D-8871 Kötz 2(DE)**

(74) Vertreter: **Munk, Ludwig, Dipl.-Ing.**
**Maximilianstrasse 71**
**D-8900 Augsburg(DE)**

(54) **Untersatz für Töpfe.**

(57) Bei einem Untersatz für Töpfe, insbesondere für ohne direkten Flammkontakt über einer offenen Flamme zu erhitzendes Kochgeschirr, mit einer Aufnahmeplatte (1), die in einer umlaufenden, ihren Rand übergreifenden Fassung (2) aufgenommen und in ihrer in die Fassung (2) eingelegten Stellung von über ihren Rand annähernd gleichmäßig verteilten, radial angeordneten, als Abstellfüße ausgebildeten Haltestücken (6) gesichert ist, wird durch eine elastisch nachgiebige Abstützung der Aufnahmeplatte (1) im Bereich der Haltestücke (6) eine Bruchgefährdung der Aufnahmeplatte (1) weitestgehend vermieden.

FIG 1

EP 0 037 037 A1

Untersatz für Töpfe

Die Erfindung betrifft einen Untersatz für Töpfe, insbesondere für ohne direkten Flammkontakt über einer offenen Flamme zu erhitzendes Kochgeschirr, mit einer Aufnahmeplatte, die in einer umlaufenden, ihren Rand übergreifenden Fassung aufgenommen und in ihrer in die Fassung eingelegten Stellung von über ihren Umfang annähernd gleichmäßig verteilten, radial angeordneten, als Abstellfüße ausgebildeten Haltestücken gesichert ist.

Anordnungen dieser Art haben sich an sich bewährt. Die Aufnahmeplatte ist jedoch häufig Stoßbelastungen ausgesetzt und daher, wie die Erfahrung gezeigt hat, einer gewissen Bruchgefahr unterworfen. Der Grund hierfür ist darin zu sehen, daß bisher als Haltestücke massive Laschen verwendet werden, was eine praktisch völlig starre Abstützung der Aufnahmeplatte ergibt, so daß die selbst ebenfalls starre Aufnahmeplatte bei Stoßbeaufschlagung nicht nachgeben bzw. ausweichen kann.

Hiervon ausgehend ist es daher die Aufgabe der vorliegenden Erfindung eine Anordnung eingangs erwähnter Art unter Vermeidung der Nachteile der bekannten Anordnungen mit einfachen Mitteln so zu verbessern, daß eine Bruchgefährdung der Aufnahmeplatte weitestgehend vermieden ist.

Die erfindungsgemäße Lösung dieser Aufgabe kennzeichnet sich durch eine elastisch nachgiebige Abstützung der Aufnahmeplatte im Bereich der Abstellfüße. Vorzugsweise können die Haltestücke hierzu einfach selbst als Federelemente ausgebildet sein.

Die Aufnahmeplatte kann somit im Falle einer Stoßbeaufschlagung im Rahmen der Elastizität der Abstützung nachgeben, wodurch Stöße weitestgehend abgefangen und gedämpft werden, was zu einer Entlastung der in sichssteifen Aufnahmeplatte und damit zu einer Vermeidung von Bruchgefährdung führt.

In vorteilhafter Weiterbildung der übergeordneten Maßnahmen können die als Federelemente ausgebildeten Haltestücke jeweils einen die Aufnahmeplatte untergreifenden Auflagesteg aufweisen, der von einem am radial äußeren Plattenumfang vorzugsweise unter Vorspannung anliegenden Randfinger überragt ist und an den sich ein an der umlaufenden Fassung abgestützter, ebenfalls vorzugsweise vorgespannter äußerer Schenkel und ein auf einer Unterlage absetzbarer, innerer Schenkel anschließen. Diese Maßnahmen ergeben nicht nur eine elastisch nachgiebige Abstützung des kompletten Untersatzes und damit auch der hierzu gehörenden Aufnahmeplatte, sondern gewährleisten gleichzeitig auch eine ausgezeichnete Fixierung der Platte in der umlaufenden Fassung bei gleichzeitiger Selbstfixierung der Haltestücke. Zusätzliche Halteringe oder dergleichen können hierbei entfallen, was die Herstellung und Montage vereinfacht. Die Vorspannung des äußeren Schenkels und des Randfingers dieser Haltestücke ergibt eine saubere Klemmverbindung mit einer exakten Anlage der Aufnahmeplatte an der ihren Rand übergreifenden Fassung.

In vorteilhafter Weise kann hierbei der Auflagesteg ausgehend vom Ansatzbereich des äußeren Schenkels zum inneren Schenkel hin von der Aufnahmeplatte weg geneigt verlaufen. Diese Maßnahme erhöht die zur Verfügung stehende Federstrecke und damit auch den zur Verfügung stehenden Feder weg, was sich positiv auf die Stoßdämpfungseigenschaften des Gesamtsystems auswirkt.

Gemäß einer weiteren, besonders vorteilhaften Ausgestaltung der übergeordneten Maßnahmen können die Haltestücke laschenförmig ausgebildet und im Bereich unterhalb der plattenseitigen Fläche mit einem etwa plattenparallel verlaufenden Schlitz versehen sein, der vorzugsweise von ihrer radial inneren Kante ausgeht und etwa im Bereich unterhalb der radial äußeren Plattenbegrenzung endet. Diese Maßnahmen gewährleisten eine satte Auflage der Aufnahmeplatte auf den laschenförmigen Stützfüßen und ergeben dennoch die gewünschte Nachgiebigkeit im Bereich der Abstützung. Der hier benötigte Schlitz kann dabei vorteilhaft bereits beim Stanzen der zweckmäßig als Stanzformlinge hergestellten Haltestücke vorgesehen werden, so daß sich praktisch kein zusätzlicher Aufwand ergibt.

Eine weitere vorteilhafte Ausgestaltung der übergeordneten Maßnahmen kann darin bestehen, daß die Haltestücke mit jeweils mindestens einer Stützfeder, die
eine die plattenseitige Aufnahmefläche des zugehörigen Haltestücks übergreifende Fassung und mindestens
eine seitlich hieran angeformte, nach oben gewölbte,
die plattenseitige Aufnahmefläche überragende Federklaue aufweist, versehen ist. Hierbei ist die Aufnahmeplatte vorteilhaft normalerweise von den Haltestücken abgehoben und kann somit im Rahmen des durch
die Federklauen bewerkstelligen Spiels nachgeben.
Die verwendeten Federelemente sind verhältnismäßig
einfache Bauteile, so daß der erforderliche Aufwand
im Verhältnis zum erreichbaren Erfolg klein ist.

Weitere zweckmäßige Ausgestaltungen und vorteilhafte
Weiterbildungen der übergeordneten Maßnahmen ergeben
sich aus der nachstehenden Beschreibung einiger Ausführungsbeispiele anhand der Zeichnung in Verbindung
mit den restlichen Unteransprüchen.

Hierbei zeigen:

Figur 1    eine Teilansicht eines erfindungsgemäßen,
           über einem Gasbrenner abgesetzten Untersat-
           zes mit einem blattfederartig ausgebildeten
           Haltestück in geschnittener Darstellung,

Figur 2    eine Ansicht eines erfindungsgemäßen Untersatzes mit einem laschenförmigen Haltestück
           teilweise im Schnitt und

Figur 3    ein weiteres Ausführungsbeispiel der Erfindung mit auf die Haltestücke aufgesetzten
           Stützfedern.

5

Der grundsätzliche Aufbau des erfindungsgemäßen Untersatzes ist bei allen drei Ausführungsbeispielen derselbe. Für gleiche Teile finden daher gleiche Bezugszeichen Verwendung.

Der den Figuren zugrunde liegende Untersatz besteht aus einer runden, aus feuerfestem Glas oder dergleichen bestehenden Aufnahmeplatte 1, die in einer umlaufenden Fassung 2 aufgenommen ist. Die Fassung 2 wird einfach durch einen Blechring mit einem konischen Mantel 3 und hieran angeformten, oberen und unteren Randflanschen 4 bzw. 5 gebildet, von denen der obere Randflansch 4 den äußeren, hierzu abgestuften Rand der Aufnahmeplatte 1 übergreift und der untere Randflansch 5 eine Rastkante für radial angeordnete, über den Umfang der Aufnahmeplatte 1 annähernd gleichmäßig verteilte, den äußeren Rand der Aufnahmeplatte 1 untergreifende Haltestücke 6 bildet.

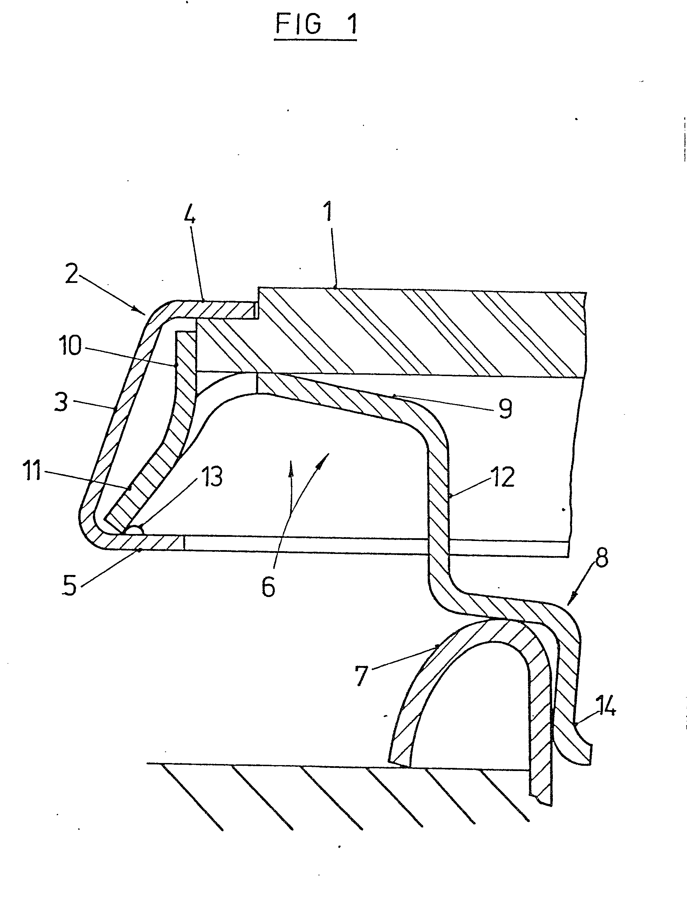

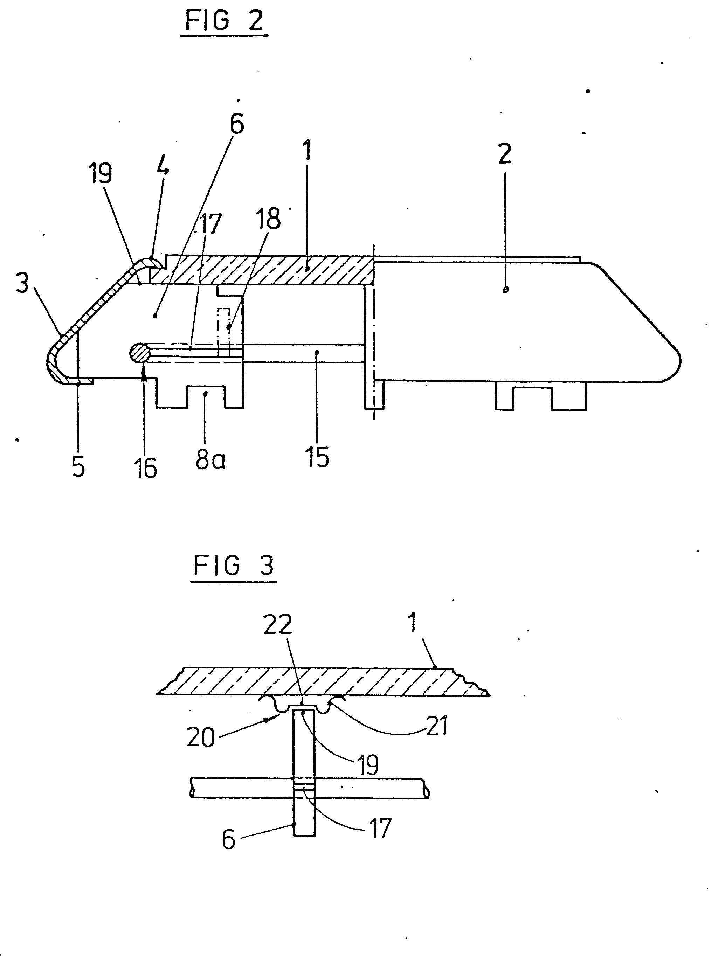

Ein Untersatz dieser Art kann beispielsweise zur Aufnahme von Kochgeschirr Verwendung finden, das ohne direkten Flammkontakt auf einer Gasflamme erhitzt werden soll. Der im dargestellten Ausführungsbeispiel nicht gezeichnete Gasbrenner ist in einer Reflektormulde angeordnet, deren äußerer Rand einen in Figur 1 bei 7 angedeuteten Steg bildet, auf den der komplette Untersatz aufsteckbar ist. Hierzu sind die Haltestücke 6 mit geeigneten Rastmitteln versehen, so daß sich ein zuverlässiger, gegen Verrutschen gesicherter Stand ergibt. Bei dem in Figur 1 dargestellten Ausführungsbeispiel ist hierzu ein den Steg 7 übergreifender Fuß 8 vorgesehen. Bei dem in Figur 2

6

dargestellten Ausführungsbeispiel sind die Haltestücke 6 hierzu mit einer Rastnut 8a versehen, in
welche der brennerseitige Steg 7 eingreifen kann.
Zur Bewerkstelligung einer elastischen Abstützung
des gesamten Untersatzes und damit auch der aus
sprödem Material bestehenden Aufnahmeplatte 1 auf
der zugeordneten Unterlage, hier auf dem Steg 7,
sind gemäß Figuren 1 und 2 die Haltestücke 6 als
Federelemente ausgebildet, die bei Stößen gegen
die Aufnahmeplatte 1 nachgeben können und damit
eine Stoßdämpfung gewährleisten, womit einer Bruchgefährdung im Bereich der Aufnahmeplatte 1 vorgebeugt ist.

Bei dem in Figur 1 dargestellten Ausführungsbeispiel
sind die die Haltestücke 6 bildenden Federelemente
als aus einem Federband gebogene Blechformlinge mit
einem den radial äußeren Rand der Aufnahmeplatte 1
untergreifenden Auflagesteg 9 ausgebildet, dessen
radial äußerer Bereich durch einen die untere Auflagefläche der Aufnahmeplatte 1 überragenden, am
äußeren Umfang der Aufnahmeplatte 1 anliegenden Randfinger 10 begrenzt ist und an den sich ein hier einfach am unteren Randflansch 5 der umlaufenden Fassung
2 abgestützter, äußerer Schenkel 11 und ein den Fuß 8
aufweisender, innerer Schenkel 12 anschließen. Der
Randfinger 10 ist dabei einfach als aus dem äußeren
Schenkel 11 und dem Übergangsbereich zum Auflagesteg
9 ausgestanzte und aufgebogene Zunge ausgebildet.

In der der Figur 1 zugrunde liegenden Montagestellung
sind der am äußeren Umfang der Aufnahmeplatte 1 anliegende Haltefinger 10 und der gegen den unteren

7

Randflansch 5 der umlaufenden Fassung 2 gepreßte äußere Schenkel 11 leicht elastisch beansprucht, so daß sich in vorteilhafter Weise eine federnde Vorspannung und damit ein sauberer Klemmsitz der Haltestücke 6 ergibt, durch den gewährleistet ist, daß die Aufnahmeplatte 1 in sauberer Anlage am oberen Randflansch 4 der umlaufenden Fassung 2 gehalten wird, was ein Klappen der Fassung vermeidet. Gleichzeitig ist sichergestellt, daß die mit dem Auflagesteg 9 und dem Randfinger 10 an der Aufnahmeplatte 1 und mit dem freien Ende des äußeren Schenkels 11 am unteren Randflansch 5 der umlaufenden Fassung 2 anliegenden Haltestücke 6 sich selbst in Stellung halten. Zur Sicherung der Haltestücke 6 kann der untere Randflansch 5 der umlaufenden Fassung mit Noppen 13 versehen oder einfach insgesamt leicht gegen den äußeren Schenkel 11 angestellt sein. Zur Erleichterung der Montage ist der äußere Schenkel 11 zweckmäßig schräg nach außen ausgestellt , d. h. unter einem stumpfen Winkel an den Auflagesteg 9 angesetzt. Diese Ausstellung bewerkstelligt gleichzeitig eine gewisse Elastizität auch innerhalb der Fixierung der Aufnahmeplatte 1 in der umlaufenden Fassung 2.

Die eigentliche Stoßdämpfung im Falle einer stoßartigen Beaufschlagung der Aufnahmeplatte 1 erfolgt im dargestellten Ausführungsbeispiel in erster Linie im Bereich zwischen den Berührungsstellen des Auflagestegs 9 an der Aufnahmeplatte 1 und des Fußes 8 am umlaufenden Steg 7. Zur Vergrößerung des Federwegs und damit zur Erzielung optimaler Stoßdämpfungseigenschaften ist der Auflagesteg 9 ausgehend vom äußeren Schenkel 11 zum inneren Schenkel 12 hin von der Aufnahmeplatte 1 weggebogen. Wie Versuche gezeigt haben, genügt es, wenn der Auflagesteg 9 unter einem Winkel im Bereich von 10° zur Aufnahmeplatte 1 geneigt ist. Diese Maßnahme gibt einerseits ausreichende Elastizität und andererseits auch ausreichende Standsicherheit. Sofern bei einem sehr starken Stoß der im vorstehend umrissenen Bereich der Haltestücke 6 vorhandene Federweg erschöpft sein sollte, kann eine weitere Abfederung durch entsprechende Nachgiebigkeit im Bereich der äußeren Schenkel 11 stattfinden. Die erfindungsgemäßen Maßnahmen gewährleisten somit trotz exakter Fixierung der Aufnahmeplatte 1 in der umlaufenden Fassung 2 eine zweistufige Stoßdämpfung.

Der innere Schenkel 12 verläuft im dargestellten Ausführungsbeispiel vom nach unten geneigten Auflagesteg 9 aus etwa lotrecht nach unten. Der innere Schenkel 12 ist, wie weiter oben bereits angedeutet, mit einem Fuß 8 versehen, der im dargestellten Ausführungsbeispiel einfach als Randabwinklung ausgebildet ist, die in den umlaufenden Steg 7 einsteckbar ist. Der freie Schenkel ist der den Fuß 8 bildenden Randabwinklung als Federklaue 14 ausgebildet, die mit Vorspannung am inneren Umfang des umlaufenden Stegs 7 zur Anlage kommt, was eine einfache Rastverbindung und damit eine ausgezeichnete Standsicherheit des gesamten Untersatzes ermöglicht. Zweckmäßig können im Bereich des inneren Umfangs des umlaufenden Stegs 7 den Federklauen 14 der Haltestücke 6 zugeordnete Rastmulden bzw. Rastnoppen oder dergleichen vorgesehen sein.

9

Bei der den Figuren 2 und 3 zugrunde liegenden
Ausführung sind die Haltestücke 6 einfach als
laschenförmige Stanzformlinge ausgebildet, die
zur Bewerkstelligung einer satten Anlage am
konischen Mantel 3 der Fassung 2 eine entsprechende Abschrägung aufweisen. Zur Fixierung
der gleichmäßig über den Umfang der Aufnahmeplatte 1 verteilten, in radialer Richtung sich
erstreckenden, laschenförmigen Haltestücke 6
ist ein elastischer Spannring 15 vorgesehen,
der durch eine Bohrung 16 der Haltestücke 6
hindurchgreift. Die lose montierbaren Haltestücke 6 werden durch den umlaufenden Spannring 15
gegen jede Ortsveränderung gesichert. Infolge
der elastischen Verformbarkeit des Spannrings 15
ist jedoch dennoch ausreichend Montagespiel vorhanden, was die Montage und ggf. auch die Demontage der Abstellfüße außerordentlich vereinfacht.

Zur Bewerkstelligung einer nachgiebigen Abstützung
der Aufnahmeplatte 1 und damit zur Vermeidung einer Bruchgefahr trotz der praktisch geradlinigen
Kraftdurchleitung zur Herdplatte bzw. zum Reflektormuldenrand sind die Haltestücke 6 hier im Bereich unterhalb der plattenseitigen Auflagefläche
19 mit einem etwa plattenparallel verlaufenden, von
der radial inneren Kante ausgehenden Schlitz 17 versehen. Der Schlitz 17 endet etwa unterhalb des radial
äußeren

Plattenrands. Im vorliegenden Ausführungsbeispiel läuft der Schlitz 17, wie am besten aus Figur 2 erkennbar ist, in die Bohrung 16 zur Aufnahme des elastischen Spannrings 15 ein. Der Schlitz 17 macht die laschenförmigen Haltestücke 6 selbst zu Federelementen, so daß hierdurch auf die Aufnahmeplatte 1 auftreffende Stöße abgefangen bzw. gedämpft werden.

Bei dem in Figur 2 dargestellten Ausführungsbeispiel ist im Bereich des Schlitzes 17 ein die den Schlitz 17 begrenzenden Seiten des laschenförmigen Stützelements distanzierender und damit den Schlitz 17 stets offenhaltender, elastischer Distanzhalter 18 vorgesehen. Hierdurch kann einer plastischen Verformung im Bereich des Schlitzes 17 vorgebeugt werden. Der Distanzhalter 18 kann einfach als in eine entsprechende Ausnehmung des zugeordneten Haltestücks 6 eingesetzte Druckfeder ausgebildet sein.

Bei dem der Figur 3 zugrunde liegenden Ausführungsbeispiel ist auf die Haltestücke 6 zur Bewerkstelligung einer elastischen Plattenabstützung jeweils eine als Ganzes mit 20 bezeichnete Stützfeder aufgelegt, die nach oben abgekröpfte, die obere Auflagefläche 19 des zugehörigen Haltestücks 6 überragende Federklauen 21 aufweist, auf denen die Aufnahmeplatte 1 aufliegt. Die Stützfedern 20 können an die Haltestücke 6 angeformt oder hiermit verstiftet sein. Bei dem der Figur 3 zugrunde liegenden Ausführungsbeispiel ist die Stützfeder 20 einfach auf die obere Auflagefläche 19 des zugeordneten Haltestücks 6 aufgelegt. Hierzu ist die Stützfeder 20 mit einer die Auflagefläche 12 übergreifenden Fassung 22 versehen, an die beidseitig nach oben gewölbte Federlaschen 21 angeformt sind. Die Höhe der

11

Federlaschen 21 ist zweckmäßig so gewählt, daß sich bereits in der normalen Montagestellung eine leichte Vorspannung ergibt, so daß sich die Stützfedern 20 praktisch von selbst fixieren. Vielfach reicht es aus, wenn jedes Haltestück 6 mit einer oder mehreren Stützfedern 20 versehen ist. Bei dem der Figur 3 zugrunde liegenden Ausführungsbeispiel ist das Haltestück 6 zusätzlich mit einem Schlitz 17 gemäß Figur 2 versehen, so daß sich eine besonders hohe, praktisch zweistufige Elastizität ergibt.

Die elastische Abstützung der Aufnahmeplatte 1 ergibt eine hohe Stoßfestigkeit. Die dennoch eine zuverlässige Abstützung der Aufnahmeplatte 1 bewerkstelligenden Haltestücke 6 ergeben eine Entlastung der umlaufenden Fassung, die infolgedessen vorteilhaft als verhältnismäßig schwach dimensionierter Zierring ausgebildet sein kann. Gleichzeitig ist sichergestellt, daß die Haltestücke 6 unabhängig von der Fassung herstellbar und praktisch lose montierbar sind. Im Falle der Verwendung eines Spannrings der bei 15 angedeuteten Art kann dieser hierzu einfach mit einer Stoßfuge versehen sein, die mittels einer Muffe überbrückbar ist.

Vorstehend sind zwar einige besonders bevorzugte Ausführungsbeispiele der Erfindung näher erläutert, ohne daß jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung an die Verhältnisse des Einzelfalls anzupassen.

<u>A n s p r ü c h e</u>

1) Untersatz für Töpfe, insbesondere für ohne direkten Flammkontakt über einer offenen Flamme zu erhitzendes Kochgeschirr, mit einer Aufnahmeplatte (1), die in einer umlaufenden, ihren Rand übergreifenden Fassung (2) aufgenommen und in ihrer in die Fassung (2) eingelegten Stellung von über ihren Umfang annähernd gleichmäßig verteilten, radial angeordneten, als Abstellfüße ausgebildeten Haltestücken (6) gesichert ist, <u>gekennzeichnet durch</u> eine elastisch nachgiebige Abstützung der Aufnahmeplatte (1) im Bereich der Haltestücke (6).

2) Untersatz nach Anspruch 1, <u>dadurch gekennzeichnet,</u> <u>daß</u> die vorzugsweise als Preß- bzw. Stanzformlinge hergestellten Haltestücke (6) jeweils als Federelement ausgebildet sind.

3) Untersatz nach Anspruch 1 und 2, <u>dadurch gekenn-</u> <u>zeichnet, daß</u> die als Federelemente ausgebildeten Haltestücke (6) jeweils einen die Aufnahmeplatte (1) untergreifenden Auflagesteg (9) aufweisen, der von einem am radial äußeren Plattenumfang vorzugsweise unter Vorspannung anliegenden Randfinger überragt ist, und an den sich ein an der umlaufenden

2

Fassung (2) abgestützter, vorzugsweise vorgespannter äußerer Schenkel (11) und ein auf einer Unterlage aufsetzbarer, innerer Schenkel (12) anschließen.

4) Untersatz nach Anspruch 3, dadurch gekennzeichnet, daß der äußere Schenkel (11) sich unter einem stumpfen Winkel an den Auflagesteg (9) anschließt und mit seinem freien Ende an einem unteren, vorzugsweise hiergegen angestellten Randflansch (5) der umlaufenden Fassung (2) abgestützt ist.

5) Untersatz nach Anspruch 3, dadurch gekennzeichnet, daß der Randfinger (10) als aus dem äußeren Schenkel (11) und dem hieran sich anschließenden Bereich des Auflagestegs (9) herausgeschnittene, aufgebogene Zunge ausgebildet ist.

6) Untersatz nach Anspruch 3, dadurch gekennzeichnet, daß der Auflagesteg (9) ausgehend vom Ansatzbereich des äußeren Schenkels (11) zum inneren Schenkel (12) hin von der Aufnahmeplatte (1) weggeneigt verläuft, vorzugsweise gegenüber der Ebene der Aufnahmeplatte (1) unter einem spitzen Winkel von etwa 10 $^\circ$ geneigt ist.

7) Untersatz nach Anspruch 3, dadurch gekennzeichnet, daß der innere Schenkel (12) im Bereich seines dem Auflagesteg (9) gegenüberliegenden Endes einen Fuß aufweist, der im Bereich seines freien Endes mit einer vorzugsweise als Federklaue (14) ausgebildeten Randabwinklung versehen ist.

8) Untersatz nach wenigstens einem der vorhergehenden Ansprüche 1 und 2, dadurch gekennzeichnet, daß die Haltestücke (6) laschenförmig ausgebildet und im Bereich unterhalb der plattenseitigen Auflagefläche (19) mit einem etwa plattenparallel verlaufenden Schlitz (17) versehen sind, der vorzugsweise von ihrer radial inneren Kante ausgeht und etwa im Bereich unterhalb der radial äußeren Plattenbegrenzung endet.

9) Untersatz nach Anspruch 8, dadurch gekennzeichnet, daß die laschenförmig ausgebildeten Haltestücke (6) auf einem elastischen Spannring (15) aufgenommen sind und daß der Schlitz (17) bis zu der dem Spannring (15) zugeordneten haltestückseitigen Bohrung (16) reicht.

10) Untersatz nach Anspruch 8, dadurch gekennzeichnet, daß die vom Schlitz (17) begrenzten Seiten der Haltestücke (6) durch einen elastischen, vorzugsweise als Druckfeder ausgebildeten Distanzhalter (14) distanziert sind.

11) Untersatz nach Anspruch 1, dadurch gekennzeichnet, daß die Haltestücke (6) mit jeweils mindestens einer Stützfeder (20), die eine die plattenseitige Auflagefläche (19) des zugehörigen Haltestücks (6) übergreifende Fassung (22) und mindestens eine seitlich hieran angeformte, nach oben gewölbte, die Auflagefläche (19) übergreifende Federklaue (16) aufweist, versehen sind.

FIG 1

0037037

## FIG 2

## FIG 3

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 885 128 (DILLS)<br><br>* Spalte 4, Zeilen 26-56; Abbildung 1 * | 1-3,7 |
| | -- | |
| | US - A - 2 727 133 (SCOFIELD)<br><br>* Abbildungen 3,4; Spalte 4, Zeilen 27-75; Spalte 5, Zeilen 1-34; Spalte 6, Zeilen 1-5 * | 1,2 |
| | -- | |
| | DE - C - 608 697 (KAHLA)<br><br>* Insgesamt * | 1 |
| | -- | |
| | US - A - 2 515 579 (ALLEN)<br><br>* Abbildungen 2,3 * | 8 |
| | -- | |
| | GB - A - 986 766 (RADIATION LTD.)<br><br>* Abbildungen 2,4 * | 1 |
| | ---- | |

**KLASSIFIKATION DER ANMELDUNG (Int. Cl.³)**

F 24 C 15/10
A 47 J 36/34

**RECHERCHIERTE SACHGEBIETE (Int. Cl.³)**

A 47 J
F 24 C
H 05 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-07-1981 | SCHARTZ |

EPA form 1503.1   06.78